# EUROPEAN PATENT APPLICATION

(11) **EP 4 088 971 A1**
(43) Date of publication of application: **16.11.2022**
(21) Application number: 22000131.7
(22) Date of filing: 10.05.2022
(51) Int. Cl.: B60Q 1/30

(54) **REAR FOG LAMP DEVICE OF A ROAD VEHICLE**

(30) Priority: 12.05.2021 IT 202100012179
(71) Applicant: Bortone, Michele, 13041 Bianzè (VC) (IT)
(72) Inventor: Bortone, Michele, 13041 Bianzè (VC) (IT)
(74) Representative: Aprà, Mario

(57) **Abstract**

Road vehicle comprising a rear fog lamp device (10), said device (10) being characterized in that it comprises an electrical power supply and control circuit (C) including:
- electrical accumulator means (1) configured for the electrical supply of said circuit (C);
- at least one rear electrical lamp (2.1) of rear fog lamp means;
- sensor means (3), arranged in the rear part of said road vehicle and configured to detect a further road vehicle, arriving at the rear in the same direction,
- wherein said sensor means (3) are electrically connected with respect to said electrical accumulator means (1) and comprise an electromagnetic radiation detecting means, respectively a motion detecting means, and a corresponding electrical signal emitting means;
- electrical control means (6), electrically connected with respect to said electrical accumulator means (1) and with respect to said at least one electrical lamp (2.1) and which are configured to determine, alternatively, the electrically powered or non-powered state of said at least one electrical lamp (2.1), wherein said electrical control means include relay means (6.1);
- electrical switch means (4), configured to Implement the electrical connection, when electrically inserted, of said electrical accumulator means (1) with respect to said sensor means (3) and said at least one electrical lamp (2.1), the latter by means of said electrical control means (6).

## Description

The present invention relates to a rear fog lamp device of a road vehicle.

Road vehicles, for example cars, are provided with a rear fog lamp device, single or double, adapted to increase the visibility thereof with respect to vehicles arriving from the rear in the same direction of travel. Such rear fog lamp device is currently called "rear fog light".

Such known rear lamp device must only be used in the event of heavy fog, heavy rain or heavy snow. In fact, the illuminating means, for example a lamp or two lamps, with which the aforementioned rear lamp device is provided emit luminous radiations of high intensity, suitable for forming a light beam that is clearly visible even through a thick curtain of fog. However, the light radiations emitted by a rear fog lamp device of a first road vehicle are annoying for the driver of a second vehicle arriving from the rear in the same direction. In particular, these light radiations are all the more annoying the more the distance between the two vehicles is reduced. In fact, such light radiations, in the event of a relatively short distance between the first vehicle and the second vehicle, cause the driver of the second vehicle to dazzle, with a consequent dangerous condition for driving the second vehicle. To obviate this drawback, the driver of the first vehicle, who concentrates his/her attention on the vision of the road ahead, should intervene by switching an electrical switch of the aforementioned rear lamp device to the "off" position. However, the driver of the first vehicle rarely performs this maneuver and, on the other hand, in carrying out this maneuver, he/she must divert attention from driving, resulting in a dangerous situation. Furthermore, after the driver of the first vehicle has deactivated the rear fog lamp, if the second vehicle overcomes the first vehicle, the driver of the first vehicle would then have to switch the electrical switch again, this time to the "on" position of the aforementioned rear lamp device, with a consequent further danger for driving.

Patent application no. 102020000010660 of 12/05/2020 of the same owner provides a rear fog lamp device for a road vehicle and a method for controlling said device, which effectively solve the aforementioned drawbacks.

However, the aforementioned patent application provides that two vehicles close together, one behind the other, are both provided with the claimed device to be able to achieve the purpose of automatically suspending the rear lighting of the front vehicle and avoiding glare of the driver of the vehicle arriving from the rear in the same direction. This fact determines a limitation of the use of the device itself. The present invention intends to obviate the aforementioned drawbacks.

An object of the present invention is to provide a rear fog lamp device for a road vehicle, which automatically switches off the rear lighting of the vehicle itself, allowing to avoid the dazzling of the driver of another vehicle, arriving at the rear in the same direction.

Another object of the present invention is to provide a rear fog lamp device for a road vehicle that, in the event of automatic suspension of operation, can automatically return to the operational state of rear lighting, when the situation of risk of dazzling of a driver of another vehicle coming at the rear in the same direction of travel ceases.

A further object of the present invention is to provide a rear fog lamp device for a road vehicle, which has a simple structure, safe operation and requires a modest technical-economic expenditure.

In view of such objects, the present invention provides a rear fog lamp device for a road vehicle, the essential feature of which forms the subject of claim 1.

In particular, the rear fog lamp device for a road vehicle, according to the present invention, essentially comprises an electrical power supply and control circuit including:
- electrical accumulator means configured for the electrical supply of said circuit;
- at least one rear electrical lamp of rear fog lamp means;
- sensor means, arranged in the rear part of said road vehicle and configured to detect a further road vehicle, arriving at the rear in the same direction,
   - wherein said sensor means are electrically connected with respect to said electrical accumulator means and comprise an electromagnetic radiation detecting means, respectively a motion detector, and a corresponding electrical signal emitting means;
- electrical control means, electrically connected with respect to said electrical accumulator means and with respect to said at least one electrical lamp and which are configured to determine, alternatively, the electrically powered or non-powered state of said at least one electrical lamp, wherein said electrical control means include relay means,
- electrical switch means, configured to implement the electrical connection, when electrically inserted, of said electrical accumulator means with respect to said sensor means and said at least one electrical lamp, the latter by means of said electrical control means.

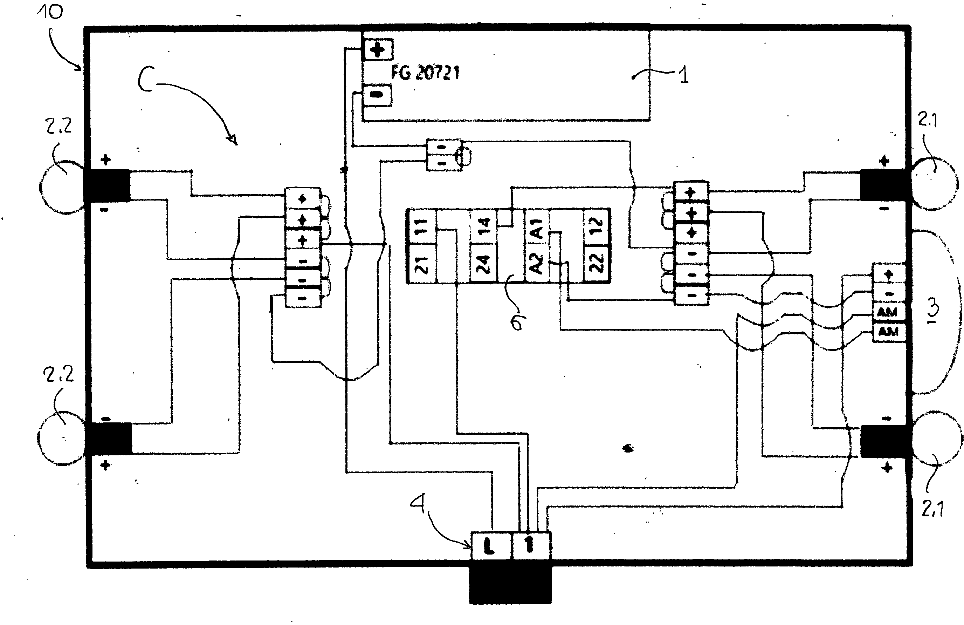

Said relay means comprise a coil means, or equivalent electronic means, which is electrically connected with respect to said electrical signal emitting means of said sensor means and a movable contact means, which is kept in the normally open position, a position in which said relay means allow the electrical supply of said at least one lamp by said electrical accumulator means, while said movable contact means are switched to the electrical closing position for the time in which said detector means of said sensor means detects an electromagnetic radiation, respectively a movement, and said electrical signal emitting means emits a corresponding electrical signal, which determines the electrical closure of said movable contact. Further features and advantages are readily apparent from the following detailed description of an embodiment of the invention with reference to the single figure in the drawing, which shows important details for the invention, as well as from the claims. The features illustrated herein should not necessarily be understood to be in scale and they are represented so that the peculiarities according to the invention are clearly highlighted. The different features can be obtained individually or in any combination with each other, as variants of the invention.

The accompanying drawing illustrates the electrical diagram of the rear fog lamp device for a road vehicle (not shown), according to an embodiment of the present invention. Said rear fog lamp device of a road vehicle is designated as a whole with reference numeral 10.

In particular, the rear fog lamp device 10 for a road vehicle, according to the present invention, essentially comprises an electrical power supply and control circuit C including:
- electrical accumulator means 1 configured for the electrical supply of said circuit;
- at least one rear electrical lamp 2.1 of rear fog lamp means. In the illustrated example, the circuit C comprises two rear electrical lamps 2.1, as well as two front electrical lamps 2.2 (not falling within the present invention);
- sensor means 3, arranged in the rear part of said road vehicle and configured to detect a further road vehicle, arriving at the rear in the same direction,
- wherein said sensor means 3 are electrically connected with respect to said electrical accumulator means and comprise an electromagnetic radiation detecting means, respectively a motion detector, and a corresponding electrical signal emitting means;
- electrical control means 6, electrically connected with respect to said electrical accumulator means 1 and with respect to said at least one electrical lamp 2.1 and which are configured to determine, alternatively, the electrically powered or non-powered state of said at least one electrical lamp 2.1, wherein said electrical control means include relay means 6.1;
- electrical manual switch means 4, configured to implement the electrical connection, when electrically inserted, of said electrical accumulator means 1 with respect to said sensor means 3 and said at least one electrical lamp 2.1, the latter by means of said electrical control means 6.

Said relay means 6.1 comprise a coil means, or equivalent electronic means, which is electrically connected with respect to said electrical signal emitting means of said sensor means 3 and a movable contact means, which is kept in the normally open position, a position in which said relay means 6.1 allow the electrical supply of said at least one lamp 2.1 by said electrical accumulator means 1, while said movable contact means are switched to the electrical closing position for the time in which said detector means of said sensor means 3 detects an electromagnetic radiation, respectively a movement, and said electrical signal emitting means emits a corresponding electrical signal, which determines the electrical closure of said movable contact.

### Operation

A first road vehicle (not shown) comprising the rear fog lamp device 10 according to the invention, which is energized by means of the electric "o" insertion of the electrical manual switch means 4, travels along a roadway at a given running direction.

In this condition, said relay means 6.1 have the respective movable contact means kept in the normally open position, a position in which said relay means 6.1 allow the electrical supply of said at least one rear fog lamp 2.1 by said electrical accumulator means 1.

When a second road vehicle (not shown) travels along the same roadway as the first vehicle in the same direction of travel and arrives at the rear near the first road vehicle, said second road vehicle is detected by means of the sensor means 3, arranged in the rear part of said first road vehicle.

The electrical signal emitting means of said sensor means 3 emits an electrical signal which is applied to the relay means 6.1, in which the movable contact means are switched to the electrical closing position for the time in which said detector means of said sensor means 3 detects an electromagnetic radiation, respectively a movement, and said electrical signal emitting means emits a corresponding electrical signal, which determines the electrical closure of said movable contact.

Therefore, said at least one rear fog lamp 2.1 is switched off and kept off.

If said second vehicle overcomes the first vehicle or is significantly distanced from it, then the signal detecting means of the sensor means 3 no longer detects any signal, and the electrical signal emitting means ceases to emit a corresponding electrical signal, which determines the electrical opening of said movable contact of the relay means 6.1 and the corresponding electrical power supply of said at least one lamp 2.1 by said electrical accumulator means 1.

As it appears from the above, the rear fog lamp device 10 solves the technical problem described above in a simple and effective manner and allows overcoming the drawbacks of the prior art.

## Claims

1. Road vehicle comprising a rear fog lamp device (10), said device (10) being **characterized in that** it comprises an electrical power supply and control circuit (C) including:
- electrical accumulator means (1) configured for the electrical supply of said circuit (C);
- at least one rear electrical lamp (2.1) of rear fog lamp means;
- sensor means (3), arranged in the rear part of said road vehicle and configured to detect a further road vehicle, arriving at the rear in the same direction,
- wherein said sensor means (3) are electrically connected with respect to said electrical accumulator means (1) and comprise an electromagnetic radiation detecting means, respectively a motion detecting means, and a corresponding electrical signal emitting means;
- electrical control means (6), electrically connected with respect to said electrical accumulator means (1) and with respect to said at least one electrical lamp (2.1) and which are configured to determine, alternatively, the electrically powered or non-powered state of said at least one electrical lamp (2.1), wherein said electrical control means include relay means (6.1);
- electrical switch means (4), configured to implement the electrical connection, when electrically inserted, of said electrical accumulator means (1) with respect to said sensor means (3) and said at least one electrical lamp (2.1), the latter by means of said electrical control means (6).

2. Road vehicle comprising the rear fog lamp device (10), wherein said relay means (6.1) of said electrical control means (6) comprise a coil means, or equivalent electronic means, which is electrically connected with respect to said electrical signal emitting means of said sensor means (3) and a movable contact means, which is kept in the normally open position, a position in which said relay means (6.1) allow the electrical supply of said at least one lamp (2.1) by said electrical accumulator means (1), while said movable contact means are switched to the electrical closing position for the time in which said detector means of said sensor means (3) detects an electromagnetic radiation, respectively a movement, and said electrical signal emitting means emits a corresponding electrical signal, which determines the electrical closure of said movable contact.
